# EUROPEAN PATENT APPLICATION

(11) **EP 1 804 437 A1**
(43) Date of publication of application: **04.07.2007**
(21) Application number: 06125139.3
(22) Date of filing: 30.11.2006
(51) Int. Cl.: H04L 12/56, H04L 12/28, H04Q 7/38

(54) **Mobile communication apparatus and channel switching method of ad-hoc communication**

(30) Priority: 09.12.2005 JP 2005356275
(71) Applicant: FUJITSU LIMITED, Kawasaki-shi, Kanagawa 211-8588 (JP)
(72) Inventor: Ushiki, Kazumasa c/o FUJITSU LIMITED, Kawasaki-shi, Kanagawa 211-8588 (JP); Sawada, Kensuke c/o FUJITSU LIMITED, Kawasaki-shi, Kanagawa 211-8588 (JP); Fukazawa, Mitsunori c/o FUJITSU LIMITED, Kawasaki-shi, Kanagawa 211-8588 (JP)
(74) Representative: Hitching, Peter Matthew

(57) **Abstract**

A mobile communication apparatus enables communication in an infrastructure communication mode for radio communication via a base station and in an ad-hoc communication mode for direct radio communication with another mobile communication apparatus. A communication channel recognizer (1-5) recognizes an infrastructure communication channel which does not interfere with an infrastructure communication within a radio service area of a base station, from among the infrastructure communication channels assigned for the infrastructure communication. A communication channel diverter (1-4) controls the utilization of an infrastructure communication channel, recognized by the communication channel recognizer, as a channel for the ad-hoc communication mode. Such as a mobile communication apparatus can effectively utilize an infrastructure communication channel and increase a number of channels available for ad-hoc communication

## Description

The present invention relates to a mobile communication apparatus and a channel switching method of ad-hoc communication and more specifically to a mobile communication apparatus which can perform communications in an infrastructure communication mode and in an ad-hoc communication mode while the apparatus such as a portable phone terminal, a PHS (Personal Handy phone System) terminal, portable personal computer, and a vehicle-installed communication apparatus is moving and to a channel switching method of ad-hoc communications of such mobile communication apparatus.

Generally, for an ordinary wireless LAN system, there have been proposed an infrastructure communication mode in which a portable station (i.e., a personal computer or the like) can conduct communications via a fixed base station (radio access point) and in an ad-hoc communication mode in which direct radio communications can be made among the stations at close range.

The infrastructure communication mode and ad-hoc communication mode of a mobile communication apparatus, in an ordinary wireless LAN system, are not aimed for communication within a vehicle, such as an automobile, while moving at higher speeds. Sufficient research has not been conducted for realization of infrastructure communication and ad-hoc communication in a mobile communication apparatus while moving at higher speeds.

Japanese published patent application JP-A No. 2004-248180 describes a method for accurately collecting the communication condition information of wireless communication media and then switching such communication media to an optimum wireless communication medium by determining the communication mode to be used, either the infrastructure mode or the ad-hoc mode, in accordance with the collected communication condition information.

Moreover, the Japanese published patent application JP-A No. 2004-128785 describes a wireless LAN communication system which is capable of automatically switching between the infrastructure mode and ad-hoc mode under predetermined conditions. Moreover, the Japanese published patent application JP-A No. 1999-55318 describes a mobile terminal and a method of controlling the same, in which the same mobile terminal is capable of connecting with both networks of an infra-NW as a permanent network and an ad-hoc NW as a temporary network formed by a plurality of terminals while the mobile terminal is moving.

There is a need to increase the number of channels which may be used for ad-hoc communications. However, preferably, interference, due to using same channel, between infrastructure communications and ad-hoc communications, needs to be prevented even though the number of channels which may be used for ad-hoc communications is increased.

An embodiment of the present invention effectively utilizes an infrastructure communication channel to increase the number of channels which may be used for ad-hoc communications while preventing deterioration in communication quality of the infrastructure communication channel, influenced by the transmitting signal of ad-hoc communication.

An embodiment of a first aspect of the present invention can provide a mobile communication apparatus enabling communication in an infrastructure communication mode for radio communication via a base station and in an ad-hoc communication mode for direct radio communication with another mobile communication apparatus, the mobile communication apparatus comprising a communication channel recognizing means for recognizing an infrastructure communication channel which does not interfere with an infrastructure communication within a radio service area of a base station, among the infrastructure communication channels assigned for the infrastructure communication, and a communication channel diversion control means for utilizing a infrastructure communication channel, recognized by the communication channel recognizing means, as a channel for the ad-hoc communication mode.

Preferably, the communication channel recognizing means recognizes the infrastructure communication channel which can be diverted to the ad-hoc communication on the basis of a receiving state of the common control channel signal transmitted from a base station or of channel identification information of the infrastructure communication channel, notified from the base station via the common control channel.

Preferably, the communication channel recognizing means recognizes the divertible infrastructure communication channel based upon notified information indicating that the infrastructure communication is conducted or notified information indicating which infrastructure channel is used, wherein the notified information is from by another mobile communication apparatus via the ad-hoc communication channel.

Preferably, the communication channel recognizing means recognizes the infrastructure communication channel which may be diverted for the ad-hoc communication on the basis of position information of each base station previously stored in the mobile communication apparatus, channel identification information of the infrastructure communication channel used in each base station, and present position information of the mobile communication apparatus.

An embodiment of a second aspect of the present invention can provide a channel switching method of ad-hoc communication in a mobile communication apparatus, which is capable of wirelessly communicating in an infrastructure communication mode for radio communication via a base station and an ad-hoc communication mode for direct radio communication with another mobile communication apparatus, by recognizing an infrastructure communication channel which does not interfere with infrastructure communications conducted within a radio area of the base station among infrastructure communication channels assigned for infrastructure communications, and controlling diversion of a communication channel for providing ad-hoc communication using the infrastructure communication channel by switching the ad-hoc communication channel to the infrastructure communication channel.

An embodiment of a third aspect of the present invention can provide a mobile communication apparatus comprising a communication channel diverter to communicate with another mobile apparatus directly via a infrastructure communication channel usable to communicate with a base station, when the mobile communication is in a radio area of the base station.

Preferably, the channel diverter stops to use the base station channel, when the apparatus approach to the base station is detected.

Preferably, the channel diverter stops to use the infrastructure communication channel when said infrastructure communication channel is utilized by another communication with a base station approached by the mobile communication apparatus.

Reference will now be made, by way of example, to the accompanying drawings, in which:

Fig. 1(a) is a diagram illustrating principal function units of a mobile communication apparatus according to an embodiment of the present invention.

Fig. 1(b) is a diagram of moving a wireless channel interface, according to an embodiment of the present invention.

Fig. 2 is an explanatory diagram of a wireless network according to a first embodiment of the present invention.

Fig. 3 is a diagram illustrating principal function units in a first embodiment terminal in the first embodiment wireless network of the present invention.

Fig. 4 is a diagram illustrating principal function units in a second embodiment terminal in the first embodiment wireless network of the present invention.

Fig. 5 is an explanatory diagram of a wireless network according to a second embodiment of the present invention.

Fig. 6 is a diagram illustrating principal function units in a third embodiment terminal in the second embodiment wireless network of the present invention.

Fig. 7 is a diagram illustrating principal function units of a fourth embodiment terminal in the second embodiment wireless network of the present invention.

Fig. 8 is an explanatory diagram of a wireless network according to a third embodiment of the present invention.

Fig. 9 is a diagram illustrating principal function units in a fifth embodiment terminal in the third embodiment wireless network of the present invention.

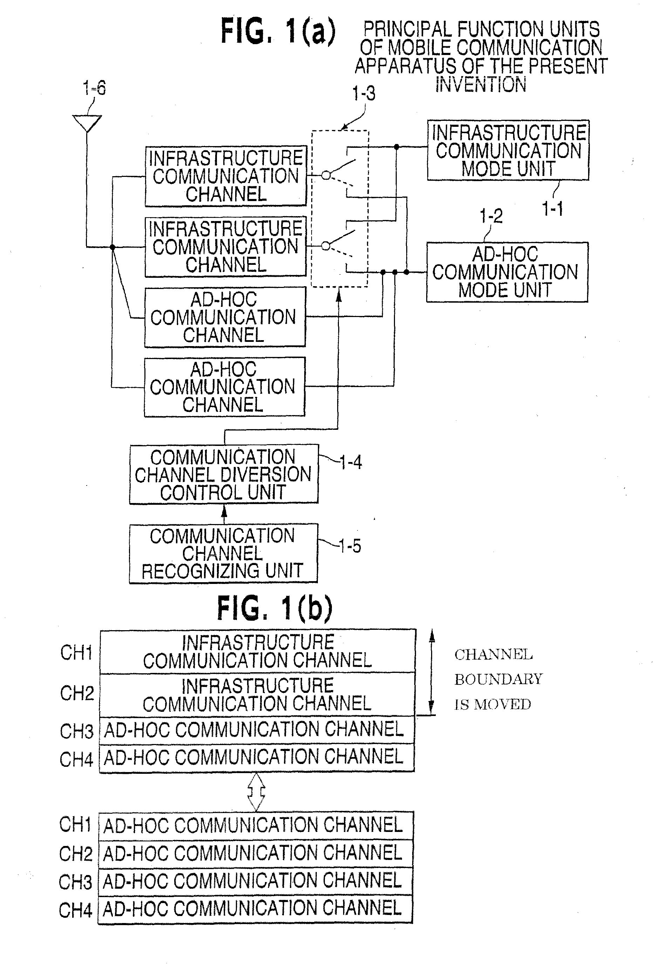

Fig. 1(a) illustrates principal function units of a mobile communication apparatus, according to an embodiment of the present invention. As illustrated in Fig. 1(a), the mobile communication apparatus of the present invention comprises an infrastructure communication mode unit 1-1 for radio communication via a base station, an ad-hoc communication mode unit 1-2 for direct radio communication with another mobile communication apparatus, a change-over switch 1-3 for switching an infrastructure communication channel for use in any of infrastructure communication or ad-hoc communication, a communication channel diversion control unit 1-4 for controlling the switching operation of the change-over switch 1-3, a communication channel recognizing unit 1-5 for recognizing an available infrastructure communication channel, and an antenna 1-6. Moreover, a signal processing unit or the like for processing the communication signals transmitted and received with the infrastructure communication mode unit 1-1 and ad-hoc communication mode unit 1-2 in the baseband frequency is also provided, but this unit is not illustrated. According to an aspect of the embodiment, the above-described units 1-1, 1-2, 1-4, and 1-3, including the switch 1-3 (as the case may be), are implemented in software (a programmed processor or controller) and/or computing hardware.

The mobile communication apparatus of the present invention (hereinafter, referred to as a "terminal") recognizes that there is an infrastructure communication channel which may be diverted for ad-hoc communication when communication is conducted at an area isolated from the radio area of the base station (situation A) or when an unused infrastructure communication channel exists (for example, in FIGS. 1(b), INFRA Channel #2) even if the mobile communication apparatus is in the radio area of the base station (situation B), and notifies the divertible infrastructure communication channel to the communication channel diversion control unit 1-4.

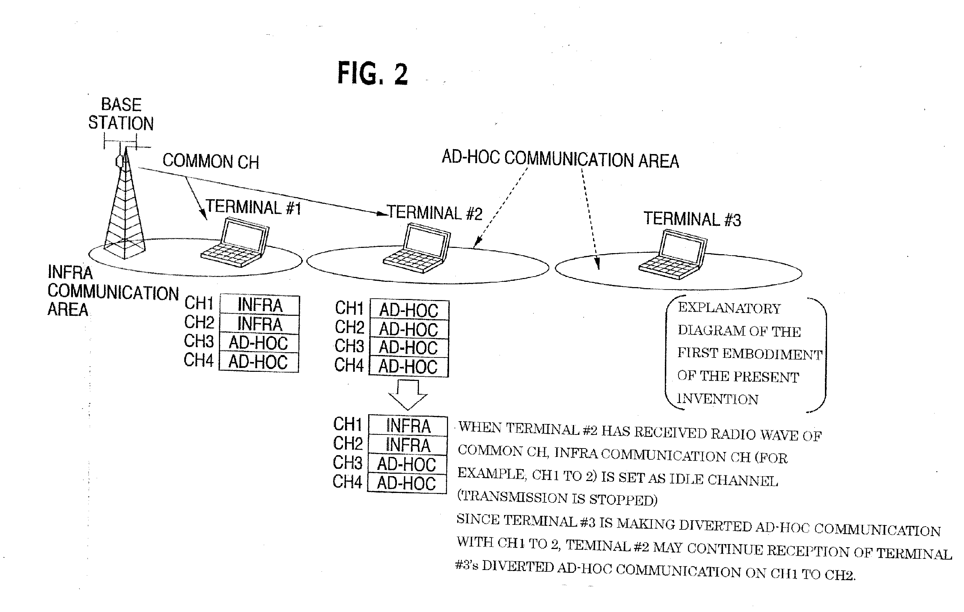

The communication channel diversion control unit 1-4 switches the communication mode to the ad-hoc communication mode with the change-over switch 1-3 for enabling the ad-hoc communication mode unit 1-2 to conduct the ad-hoc communication using the divertible infrastructure communication channel (in FIGS. 1(b) and 2, INFRA channels #1 or #2 in situation A, and/or only INFRA channel #1 in situation B), when the divertible infrastructure communication channel is notified by the communication channel recognizing unit 1-5.

Accordingly, as illustrated in Fig. 1(b), the communication channels CH1, CH2, CH3, and CH4 can be used as the ad-hoc communication channels (although only the communication channels CH3 and CH4 may have been initially assigned for the ad-hoc communication channel) by diverting the communication channels CH1, CH2 assigned as the infrastructure communication channels to be ad-hoc communication channels. Thereby, the available number of ad-hoc communication channels can be increased. Preferably the diversion mentioned above does not cause interference with other infrastructure channels being used.

Here, initial infrastructure communication channel and ad-hoc communication channel can be used as channels to be time-division multiplexed on the same frequency or as channels to use different frequency bands. Moreover, the initial infrastructure communication channel and ad-hoc communication channel can have a plurality of channels respectively by using time-division multiplex or by using an access system, such as CSMA or the like. As a result, it is possible to introduce a structure which is used by a plurality of mobile communication apparatuses.

Recognition of the divertible infrastructure communication channel explained above will be explained below. The first embodiment will be explained with reference to Fig. 2. In Fig. 2, it is assumed that a terminal #1 is located within the radio area covered by a base station, namely in the range of the infrastructure communication area, while a terminal #2 is outside of the infrastructure communication area but is coming close to the infrastructure communication area, and a terminal #3 is located in an area far from the infrastructure communication area.

In the radio communication system of the first embodiment, all terminals are using recognizable common control channels and the base station transmits notifying information to control the terminals to recognize the existence of the base station at a transmitting power higher than transmitting power in ad-hoc communications among the terminals. Here, the terminal #2 does not receive the notifying information via a common control channel from the base station, because terminal #2 is located, at the beginning, in an area far from the infrastructure communication area, and thus the terminal #2 recognizes that the infrastructure communication is not influenced or not influenceable even when the infrastructure communication channels CH1, CH2 are diverted for the ad-hoc communication. Accordingly, the infrastructure communication channel CH1 or CH2 is determined to be divertible for the ad-hoc communication and thereby the channels CH1 to CH4 may be used for the ad-hoc communication.

The terminal #3 also does not receive the notifying information via the common control channel from the base station and also recognizes that terminal #3 is far from the infrastructure communication area. Like the terminal #2, in terminal #3 the infrastructure communication channel CH1 or CH2 is diverted or divertible for the ad-hoc communication and thereby the ad-hoc communication can be realized with, for example, the terminal #2 by also using the infrastructure communication channel CH1 or CH2.

However, when the terminal #2 enters the radio area range of the notifying information via the common control channel from the base station during diversion of the infrastructure communication channel CH1 or CH2 to the ad-hoc communication, the terminal #2 recognizes that the ad-hoc communication diversion of CH1 or CH2 will interfere with the infrastructure communication, based on the receiving conditions of the common control channel from the base station, stops transmission of the ad-hoc communication on the infrastructure communication channel CH1 or CH2, and conducts the ad-hoc communication using the ad-hoc communication channel CH3 or CH4. According to an aspect of the embodiments, the terminal #2's reception on CH1 or CH2 might not be stopped, and reception of terminal #3's diverted ad hoc communication continues on CH1 or CH2.

Therefore, since the terminal #3 is capable of continuing the diverted ad-hoc communication with the infrastructure communication channel CH1 or CH2, the terminal #2 may continue reception of the diverted ad hoc communication on CH1 or CH2 from the terminal #3 because #3 is still far from the base station. In this case terminal #2 can use CH3 or CH4 as transmission channel(s) and can continue to use CH1 or CH2 as reception channel(s) for diverted ad-hoc communication with the terminal #3.

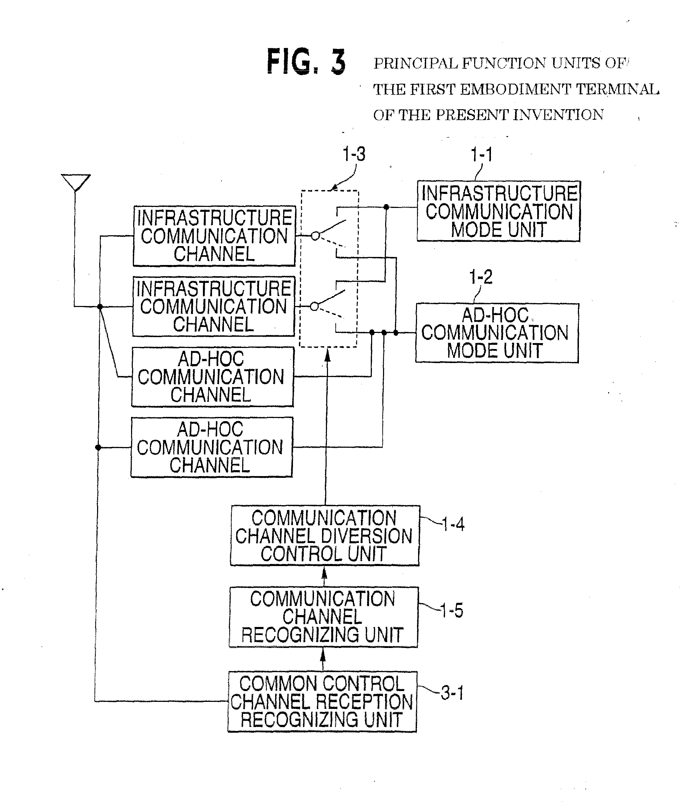

The principal function units of a first embodiment terminal in the first embodiment wireless network of the present invention are illustrated in Fig. 3. The principal function units of this first embodiment terminal are provided with a common control channel reception recognizing unit 3-1 added to the principal function units of Fig. 1. In particular, the common control channel reception recognizing unit 1-3 recognizes and notifies a particular common control channel used by above station. The common control channel reception recognizing unit 3-1 recognizes that a base station exists within a neighboring area when the common control channel reception unit 3-1 receives the common control channel signal transmitted from the base station and notifies the base station recognition to the communication channel recognizing unit 1-5 as the means for managing, including recognizing, the divertible infrastructure communication channef(s). The communication channel recognizing unit 1-5 recognizes the divertible infrastructure communication channel on the basis of the information notified from the common control channel reception recognizing unit 3-1 indicates the terminal approaching the base station.

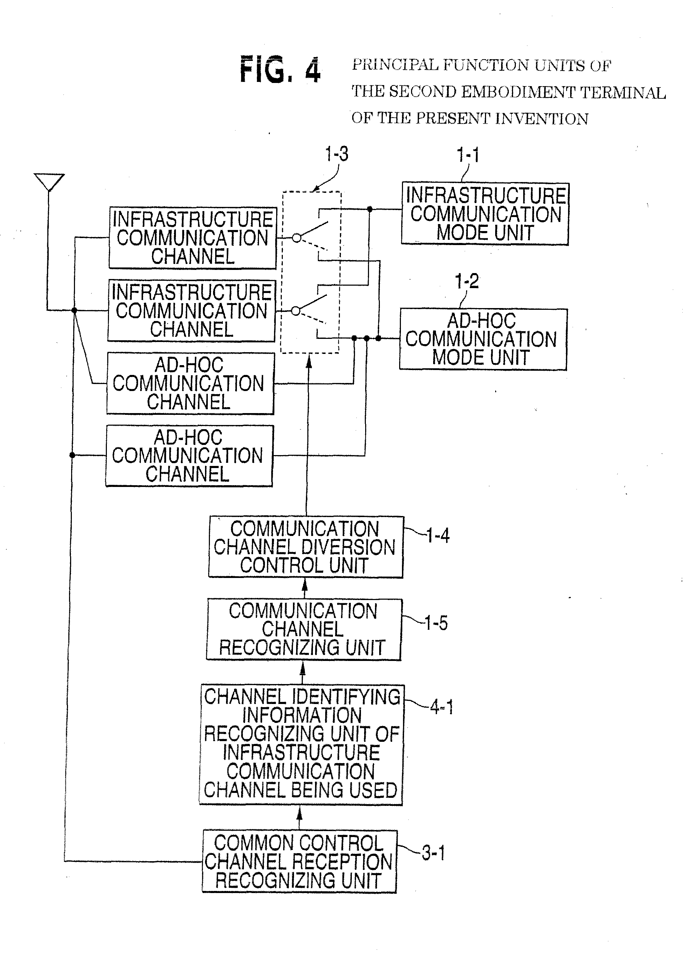

Next, a second embodiment terminal of the present invention will be explained with reference to Fig. 4. In this second embodiment terminal, the base station transmits, like the first embodiment terminal explained above, the notifying information for urging the terminals to recognize the channel of the infrastructure communication channel being used by the relevant base station, according to a transmitting power higher than the transmission power of the ad-hoc communications among the terminals, via the common control channel which can be recognized by all terminals provided in the relevant radio communication system.

Typically according to the embodiment, a terminal always supervises the common control channel and diverts an infrastructure communication channel other than the channels notified via the common control channel by the base station. If, based upon a specific common control channel identified by the common control channel reception recognizing unit 1-3, the channel identifying information of a diverted infrastructure communication channel which is currently used for ad-hoc communication is received from the base station, the ad-hoc communication on the infrastructure communication channel is suspended, and the ad-hoc communications are continued using the ad-hoc communication channel or another infrastructure communication channel which may be diverted for the ad-hoc communication.

The principal function units of the second embodiment terminal in the first embodiment wireless network of the present invention are illustrated in Fig. 4. The principal function units of this second embodiment terminal are provided with a channel identifying information recognizing unit 4-1 recognizing a usable infrastructure communication channel, in addition to the principal functions units of Fig. 3. The channel identifying information recognizing unit 4-1 recognizes a usable infrastructure communication channel, based upon common control channel identifying information, notified via the common control channel transmitted from the base station and recognized by the common control channel reception recognizing unit 3-1. The unit 4-1 notifies the recognizing information of a usable infrastructure communication channel to the communication channel recognizing unit 1-5. The communication channel recognizing unit 1-5 recognizes the infrastructure communication channel which may be diverted or whether to continue to be diverted, on the basis of the relevant common control channel recognizing information received from the channel identifying information recognizing unit 4-1 identifying or notifying an infrastructure communication channel being used by a base station.

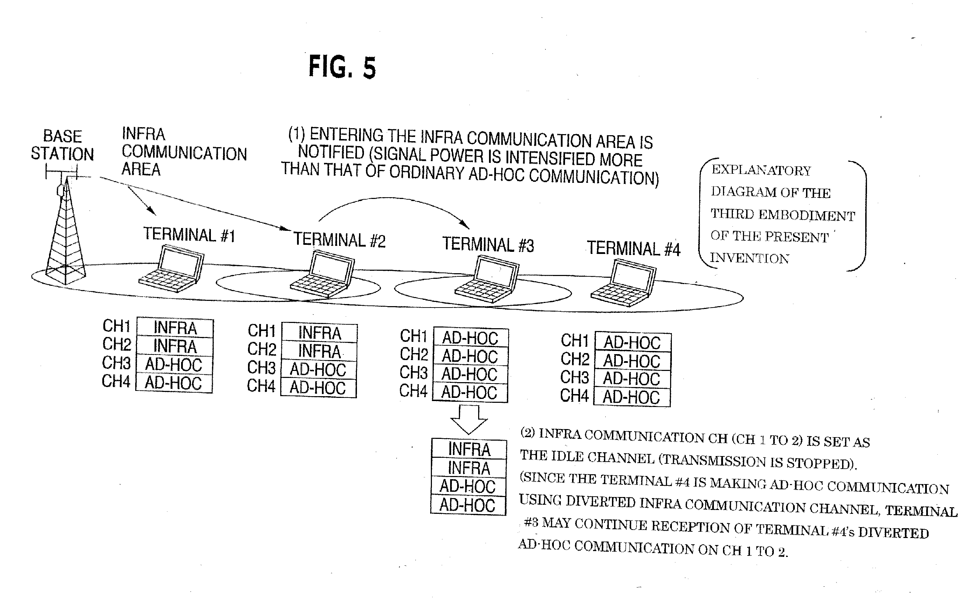

Next, the second embodiment wireless network of the present invention will be explained with reference to Fig. 5. In Fig. 5, it is assumed that the terminals #1 and #2 are located within the radio area of the base station, namely in the range of the infrastructure communication area, while the terminal #3 is outside the infrastructure communication area, but is located at a position near the infrastructure communication area and the terminal #4 is located in an area far from the infrastructure communication area.

The terminals #3 and #4 are not notified from the base station or another terminal and divert the infrastructure communication channels CH1 and CH2 for the ad-hoc communications. Here, when the terminal #2 starts the infrastructure communication with the base station using the infrastructure communication channel, the terminal #2 notifies the ambient terminal #3 (terminal which exists within a direct communication area with terminal #2) of an infrastructure communication channel currently used by the terminal #2 to conduct the infrastructure communication. According to an aspect of the embodiment, this notification of the infrastructure communication channel currently used by the terminal #2 can be transmitted to terminal #3 in a transmission power higher than that of the ordinary ad-hoc communication.

The terminal #3 having received this notifying information, stops diversion of the infrastructure communication channels CH1, CH2 for the ad-hoc communications and executes transmission of ad-hoc communications using the ad-hoc communication channel CH3 or CH4. According to an aspect of the embodiments, the terminal #3's reception on CH1 or CH2 might not be stopped, and reception of terminal #3's diverted ad hoc communication can continue on CH1 or CH2. Therefore, since the terminal #4 is capable of continuing the diverted ad-hoc communications on the infrastructure communication channel CH1 or CH2, the terminal #3 may continue receiving terminal #4's diverted ad hoc communication on CH1 or CH2.. In this case terminal #2 can use CH3 or CH4 as transmission channel(s) and can continue to use CH1 or CH2 as reception channel(s) for diverted ad-hoc communication with the terminal #3.

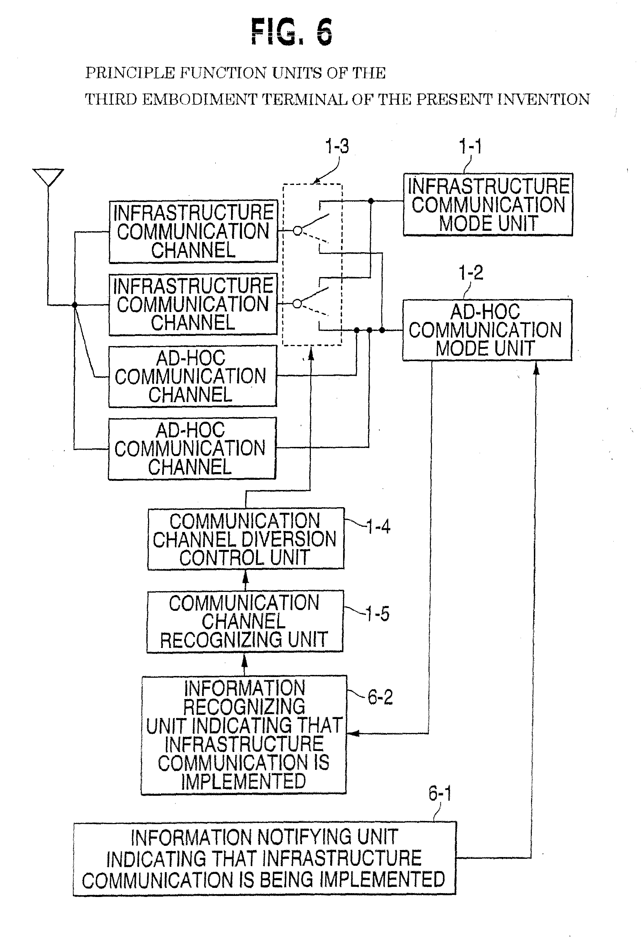

The principal function units in a third embodiment terminal in the second embodiment wireless network of the present invention is illustrated in Fig. 6. The principal function units in this embodiment are an information notifying unit 6-1 indicating that the infrastructure communication is being performed and an information recognizing unit 6-2 indicating that the infrastructure communication is being performed or infrastructure communication is conductible or can be performed/usable, which are additionally provided to the principal function units of Fig. 1. The information notifying unit 6-1 that indicates the infrastructure communication is being performed, generates information indicating start of the infrastructure communication when such communication is started and transmits the same information to the ad-hoc communication mode unit 1-2, thereby providing the means for notifying status of infrastructure communication to other terminals. This ad-hoc communication mode unit 1-2 notifies the same information to other ambient terminals or other terminals in the wireless communication environment with the ad-hoc communications.

Moreover, the recognizing unit 6-2 recognizes that the infrastructure communication is being performed or conductible by receiving information which indicates that the infrastructure channel is being performed from the other terminal via the ad-hoc communication mode unit 1-2 and notifies the same information to the communication channel recognizing unit 1-5. This communication channel recognizing unit 1-5 stops diversion of the infrastructure communication channel to the ad-hoc communication based on the same information and executes transmission for ad-hoc communication on an ad-hoc communication channel. More particularly the unit 1-2, 6-1 and 6-2 provide means for managing the divertible infrastructure communication channel(s).

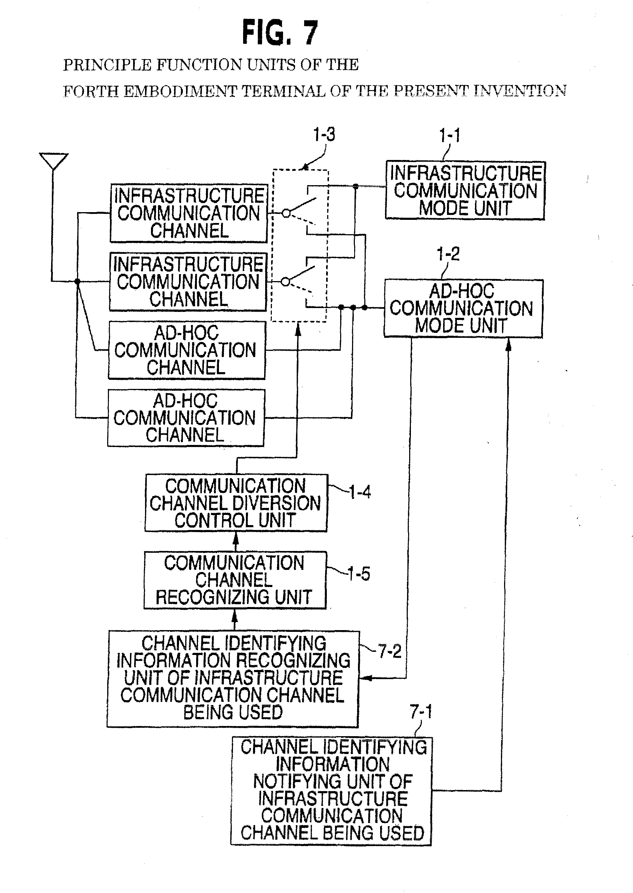

Next, the fourth embodiment terminal of the present invention will be explained with reference to FIG. 7. Like the third embodiment terminal explained above, in this fourth embodiment, the terminal #2 notifies, when the infrastructure communication with the base station is started by using the infrastructure communication channel, the channel identifying information of the infrastructure communication channel used by the infrastructure communication to the ambient terminal #3 using the ad-hoc communication channel. This notification by the ad-hoc communication channel can be transmitted in the transmission level higher than that of the ordinary ad-hoc communication.

The terminal #3 having received this notifying information stops diversion of the infrastructure communication channel CH1 or CH2 for the ad-hoc communication and executes transmission of the ad-hoc communications using the ad-hoc communication channels CH3, CH4 or another available infrastructure communication channel (as the case may be). However, since the terminal #4 is capable of continuing the diverted ad-hoc communication with the infrastructure communication channel CH1 or CH2, the terminal #3 can continue reception of terminal #4's diverted infrastructure communication channel CH1 or CH2. In this case terminal #2 can use CH3 or CH4 as transmission channel(s) and can continue to use CH1 or CH2 as reception channel(s) for ad-hoc communication with the terminal #3.

The principal function units in the fourth embodiment terminal of the present invention are illustrated in Fig. 7. The principal function units of this fourth embodiment terminal are provided with a channel identifying information notifying unit 7-1 identifying a usable infrastructure communication channel and a channel identifying information recognizing unit 7-2 to recognize the usable infrastructure communication channel, which have respectively replaced the information notifying unit 6-1 and the information recognizing unit 6-2 illustrated in Fig. 6.

The channel identifying information notifying unit 7-1 of the infrastructure communication channel being used for diversion notifies, when the infrastructure communication is started, the channel identifying information of the infrastructure communication channel being used, to the ad-hoc communication mode unit 1-2. This ad-hoc communication mode unit 1-2 notifies, in turn, the same information to another ambient terminal with the ad-hoc communication.

The channel identifying information recognizing unit 7-2 recognizes the identifying information of a usable infrastructure communication channel notified from other terminal(s) via the ad-hoc communication mode unit 1-2 and notifies the same information to the communication channel recognizing unit 1-5. This communication channel recognizing unit 1-5 stops, based on the same information, diversion of the infrastructure communication channel being used by other terminal(s) to the ad-hoc communication and executes the transmission of ad-hoc communications with the other communication channels.

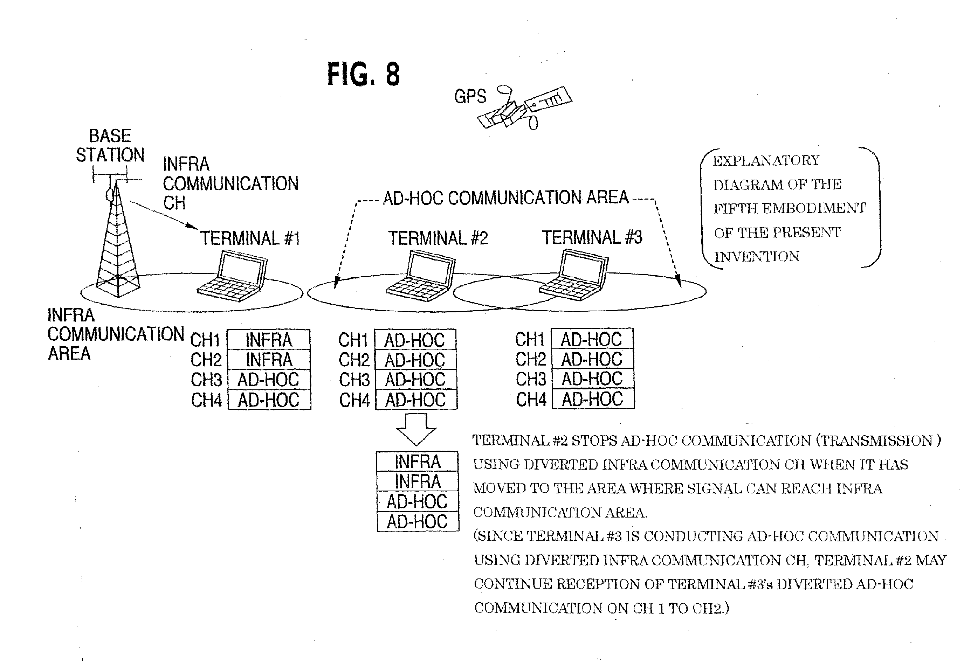

Next, a third embodiment of a wireless network of the present invention will be explained with reference to Fig. 8. In this Fig. 8, it is assumed that the terminal #1 is located within the infrastructure communication area, the terminal #2 is outside of infrastructure communication area but is coming close to the infrastructure communication area, and the terminal #3 is located in the area far from the infrastructure communication area.

Each terminal #1 to #3 stores the position of each base station and the identifying information of the infrastructure communication channel used in each base station and also recognizes the positional relationship between the terminal and the base station with a position measuring apparatus of a global positioning system (GPS). When a terminal recognizes that the terminal is far enough from the base station to execute the ad-hoc communication by diverting the infrastructure communication channel without interfering with the infrastructure communication, the terminal transmits by diverting the infrastructure communication channel used for the base station for the ad-hoc communication.

However, when the terminal recognizes that the terminal is coming close to the base station, which can interfere with the infrastructure communication, the terminal stops diversion of the infrastructure communication channel to the ad-hoc transmission. In the case of an example of Fig. 8, the terminal #2 diverts the infrastructure communication channels CH1, CH2 to the ad-hoc communication when it is located, at the beginning, at the position sufficiently far from the infrastructure communication area and makes available the channels CH1 to CH4 for the ad-hoc communications.

However, when the terminal #2 recognizes that the terminal is coming close to the infrastructure communication area in the midst of diversion of the infrastructure communication channel CH1 or CH2 to the ad-hoc communications, this terminal #2 stops transmission of the ad-hoc communications with the infrastructure communication channel CH1 or CH2 and conducts transmission of ad-hoc communications using the ad-hoc communication channel CH3 or CH4. However, since the terminal #3 is capable of continuing the ad-hoc communications with the diverted infrastructure communication channel CH1 or CH2, the terminal #2 can continue reception of terminal #3's diverted infrastructure communication on channel CH1 or CH2. For example, in this case terminal #2 can use CH3 or CH4 as transmission channel(s) and can continue to use CH1 or CH2 as reception channel(s) for ad-hoc communication with the terminal #3.

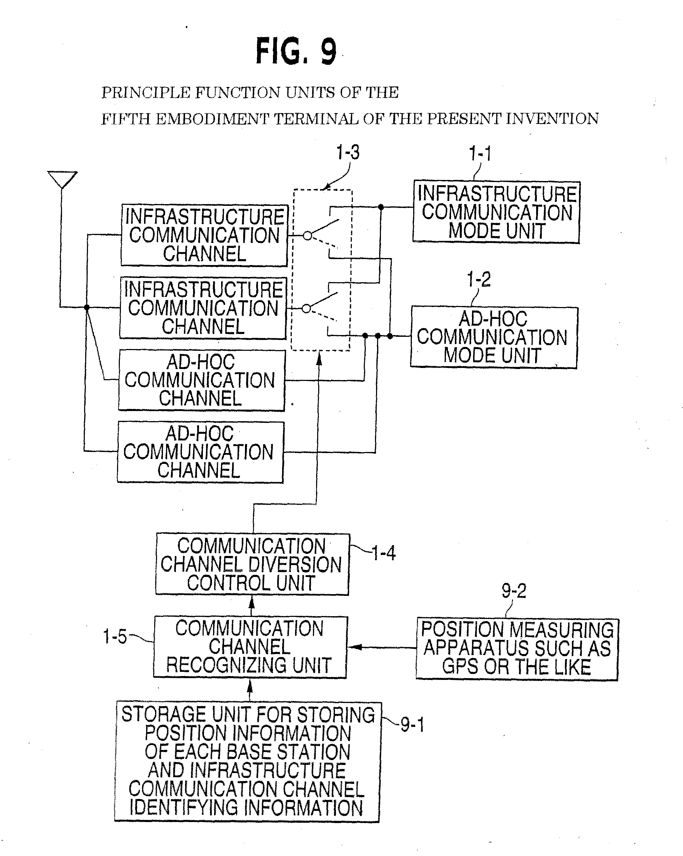

The principal function units in a fifth embodiment terminal of the present invention are illustrated in Fig. 9. The principal function units of this fifth embodiment terminal are provided with a storage unit 9-1 for storing the position information of each base station and the infrastructure communication channel identifying information, and a terminal position measuring apparatus 9-2, for example, GPS or the like, additionally provided to the principal function units of Fig. 1. Typically in the present invention the storage unit 9-1 stores previously the position information of each base station and the infrastructure communication channel identifying information and transmits the same information to the channel recognizing unit 1-5.

The position measuring apparatus 9-2 acquires the present position information of the terminal with the global positioning system (GPS) and transmits the same information to the channel recognizing unit 1-5. The channel recognizing unit 1-5 recognizes, on the basis of such information, whether the terminal is in a positional relationship with the base station to interfere with infrastructure communication, because of diverting the infrastructure communication channel for the ad-hoc communication. When such diverted ad-hoc communication interferes with the infrastructure communication, the channel recognizing unit 1-5 stops diversion of the infrastructure communication channel to the ad-hoc communication and transmits the ad-hoc communication on other ad-hoc communication channels.

According to the embodiments, the infrastructure communication channel can be used effectively for ad-hoc communication and the number of available channels of ad-hoc communication can be increased, preferably, without the diverted ad-hoc communication adversely affecting the infrastructure communication by employing a structure that recognizes the infrastructure communication channels not interfering with the infrastructure communication from among the infrastructure communication channels assigned for infrastructure communications, and for conducting the ad-hoc communication through diversion of the infrastructure communications channel.

In one embodiment, a mobile wireless communication apparatus is provided that communicates in an infrastructure communication mode for radio communication via a base station and in an ad-hoc communication mode for direct radio communication with other mobile wireless communication apparatus, comprising: a controller to control the apparatus according to a process comprising: increasing a number of infrastructure communication channels assigned for the infrastructure communication mode by recognizing, from among the infrastructure communication channels, an infrastructure communication channel available for ad hoc communication with the other mobile wireless communication apparatus; and diverting the recognized infrastructure communication channel for an ad-hoc communication mode channel to perform the ad hoc communication with the other mobile wireless communication apparatus. The process of the controller further comprises recognizing the availability of the infrastructure communication channel for the ad hoc communication by determining an infrastructure communication status depending upon the mobile wireless communication apparatus approaching or nearing an infrastructure communication area (for example, whether signal can reach or about (based upon time and/or distance) to reach infrastructure communication area), within the infrastructure communication area, or any combinations thereof.

According to an aspect of the embodiments, the infrastructure communication status is determined based upon a receiving state of an infrastructure communication channel common control channel signal transmitted from the base station, or recognizing a channel identification information of the infrastructure communication channel notified from the base station via a common control channel, or receiving a notification from another mobile communication apparatus via an ad-hoc communication channel indicating active infrastructure communication or which infrastructure channel is used, or determining position information of each base station and channel identification information of the infrastructure communication channel used in each base station, and present position information of the mobile communication apparatus with respect to each base station, or any combinations thereof.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

This application is related to and claims priority to Japanese Application No. 2005-356275 filed December 9, 2005 in the Japanese Patent Office, the contents of which are incorporated by reference herein.

## Claims

1. A mobile communication apparatus enabling communication in an infrastructure communication mode for radio communication via one or more base stations and in an ad-hoc communication mode for direct radio communication with another mobile communication apparatus, the mobile communication apparatus comprising:
communication channel recognizing means for recognizing a divertible infrastructure communication channel which does not interfere with infrastructure communication within a radio service area of a base station, from among the infrastructure communication channels assigned for the infrastructure communication, and;
communication channel diversion control means for utilizing an infrastructure communication channel, recognized by the communication channel recognizing means, as a channel for the ad-hoc communication mode.

2. The mobile communication apparatus according to claim 1, wherein the communication channel recognizing means recognizes the infrastructure communication channel which can be diverted to the ad-hoc communication based upon a receiving state of a common control channel signal transmitted from a base station or based upon a channel identification information of the infrastructure communication channel, notified from a base station via the common control channel, or any combinations thereof.

3. The communication apparatus according to claim 1, wherein the communication channel recognizing means recognizes the divertible infrastructure communication channel based upon a notification from another mobile communication apparatus via an ad-hoc communication channel indicating that the infrastructure communication is conducted or which infrastructure channel is used, or any combinations thereof.

4. The communication apparatus according to claim 1, wherein the communication channel recognizing means recognizes the divertible infrastructure communication channel based upon position information of each base station previously stored in the mobile communication apparatus, channel identification information of the infrastructure communication channel used in each base station, and present position information of the mobile communication apparatus.

5. A channel switching method of ad-hoc communication in a mobile communication apparatus, which is capable of wirelessly communicating in an infrastructure communication mode for radio communication via one or more base stations and an ad-hoc communication mode for direct radio communication with another mobile communication apparatus, the channel switching method comprising:
recognizing a divertible infrastructure communication channel which does not interfere with infrastructure communications conducted within a radio area of the base station, from among infrastructure communication channels assigned for infrastructure communications; and
controlling diversion of a communication channel for providing ad-hoc communication using the infrastructure communication channel by switching the ad-hoc communication channel to the infrastructure communication channel.

6. A mobile wireless communication apparatus comprising:
a wireless communication channel diverter to divert ad hoc communication with other mobile wireless communication apparatus to a channel usable to communicate with a base station while the mobile wireless communication apparatus is in a radio area of the base station.

7. The mobile wireless communication apparatus according to claim 6, wherein the channel diverter stops using the channel when approaching the base station.

8. The mobile wireless communication apparatus according to claim 6, wherein the channel diverter stops using the channel when said channel is utilized by another communication with the base station which the mobile communication apparatus is approaching.

9. The mobile wireless communication apparatus according to claim 6, wherein the channel diverter stops transmitting on the channel when said channel is utilized by another communication with the base station which the mobile wireless communication apparatus is approaching and/or stops transmitting on the channel when approaching the base station, and the continues receiving the ad hoc communication on the channel from the other mobile wireless communication apparatus.

10. A mobile wireless communication apparatus that communicates in an infrastructure communication mode for radio communication via a base station and in an ad-hoc communication mode for direct radio communication with other mobile wireless communication apparatus, comprising:
a controller to control the apparatus according to a process comprising:
increasing a number of infrastructure communication channels assigned for the infrastructure communication mode by recognizing, from among the infrastructure communication channels, an infrastructure communication channel available for ad hoc communication with the other mobile wireless communication apparatus; and
diverting the recognized infrastructure communication channel for an ad-hoc communication mode channel to perform the ad hoc communication with the other mobile wireless communication apparatus.

11. The apparatus according to claim 10, wherein the process of the controller further comprises recognizing the available infrastructure communication channel for the ad hoc communication by determining an infrastructure communication status depending upon a near infrastructure communication area, within the infrastructure communication area, or any combinations thereof.

12. The apparatus according to claim 11, wherein the infrastructure communication status is determined based upon a receiving state of an infrastructure communication channel common control channel signal transmitted from the base station, or recognizing a channel identification information of the infrastructure communication channel notified from the base station via a common control channel, or receiving a notification from another mobile communication apparatus via an ad-hoc communication channel indicating active infrastructure communication or which infrastructure channel is used, or determining position information of each base station and channel identification information of the infrastructure communication channel used in each base station, and present position information of the mobile communication apparatus with respect to each base station, or any combinations thereof.
